# EUROPEAN PATENT SPECIFICATION

(11) **EP 2 202 273 B1**
(45) Date of publication and mention of the grant of the patent: **16.07.2014**
(21) Application number: 09180629.9
(22) Date of filing: 23.12.2009
(51) Int. Cl.: C08L 35/06, C08L 51/04

(54) **Thermoplastic resin having excellent heat resistance and impact strength and method of preparing the same**
Thermoplastisches Harz mit ausgezeichneter Wärmebeständigkeit und Schlagfestigkeit und dessen Herstellungsverfahren
Résine thermoplastique dotée d'une excellente résistance à la chaleur et aux chocs et son procédé de préparation

(30) Priority: 29.12.2008 KR 20080135514
(43) Date of publication of application: 30.06.2010
(73) Proprietor: Cheil Industries Inc., Uiwang-si, Gyeonggi-do (KR)
(72) Inventor: Hong, Jae Keun, Uiwang-si, Gyeonggi-do (KR); Lee, Byeong Do, Uiwang-si, Gyeonggi-do (KR); Sun, Ho Ryong, Uiwang-si, Gyeonggi-do (KR); Jin, Young Sub, Uiwang-si, Gyeonggi-do (KR); Park, Hwan Seok, Uiwang-si, Gyeonggi-do (KR); Kim, Sung Kwan, Jeollanam-do (KR); Bae, Sa Chun, Uiwang-si, Gyeonggi-do (KR)
(74) Representative: Bublak, Wolfgang

(56) References cited:
- EP-A2- 0 721 962
- DE-A1- 19 839 369
- US-A- 5 574 099
- US-A- 6 022 917

## Description

The present invention relates to a thermoplastic resin and a method of preparing the same.

Generally, acrylonitrile-butadiene-styrene (ABS) copolymer resins have excellent molding properties as well as excellent impact resistance, chemical resistance, physical strength and the like. Accordingly, ABS resins may be widely used in a variety of products such as electrical/electronic appliances and automobile parts. However, the use of ABS resins is limited in applications requiring high heat resistance, because ABS resins have low heat resistance.

A commonly used method to improve the heat resistance of ABS resins includes melt extrusion of the ABS resin with a heat resistant copolymer resin. The heat resistant copolymer resin can be prepared using α-methylstyrene (AMS) or N-phenyl maleimide (PMI).

For example, a heat resistant ABS resin can be prepared using a liquid AMS monomer. This method has the benefit of low material costs and ease of handling the materials, as compared to methods using a PMI monomer in powder form.

Patent document EP 0 721 962 A2 discloses a rubber-modified thermoplastic resin which is suitable for being blended with another thermoplastic resin to impart, to the latter, an excellent mechanical strength such as tensile strength, flexurale strength or the like and an excellent impact resistance and to a composition comprising the above rubber-modified thermoplastic resin and another thermoplastic resin.

Patent document US 6,022,917 discloses a flame retardant thermoplastic resin composition comprising a fluororesin, an aromatic polycarbonate, a styrenic resin comprising at least a rubber-modified styrenic resin and a phosphate.

Patent document US 5,574,099 discloses a rubber-reinforced styrene resin composition having excellent heat resistance, impact resistance and processabillity, as well as to a process for producing the composition.

Patent document DE 198 39 369 A1 discloses a chemical and heat-resistant styrene-based resin composition which uses the following as the primary resin: (A) a graft copolymer of a diene rubber component and at least two compounds selected from vinyl compounds, cyanide vinyl compounds and maleic anhydrides; (B) a graft copolymer of an alkyl acrylate rubber component and at least two compounds selected from aromatic vinyl compounds, cyanide vinyl compounds and maleic anhydride compounds; (C) a copolymer of styrene, α-methyl styrene and a cyanide vinyl compound; and (E) a copolymer of styrene, a cyanide vinyl compound and a maleimide compound.

However, it is difficult to prepare a product having both high heat resistance and high impact strength in a continuous ABS polymerization process at high temperatures using an AMS monomer because the AMS monomer can self depolymerize. During phase inversion polymerization of the rubber and matrix material or polymerization after phase inversion, the polymer melt is continuously exposed to a temperature above which PAMS is depolymerized. This in turn can reduce the molecular weight of the polymer and/or destabilize the rubber.

It is the object of the present invention to provide a thermoplastic resin which can have excellent heat resistance and a method of preparing the same.

Particularly, it is the object of the present invention to provide a thermoplastic resin which can have both excellent heat resistance and impact strength, and a method of preparing the same.

The present invention also provides a preparation method which can improve heat resistance as well as maintain physical properties of a thermoplastic resin.

Above objects have been achieved by the provision of a thermoplastic resin composition comprising a rubber-modified styrene resin and a copolymer of N-substituted maleimide compound and aromatic vinyl compound. The copolymer of N-substituted maleimide compound and aromatic vinyl compound may be prepared by copolymerizing about 40 to about 60 % by weight of the N-substituted maleimide compound and about 40 to about 60 % by weight of the aromatic vinyl compound.

The thermoplastic resin composition of the invention can be prepared by adding and mixing the copolymer of N-substituted maleimide compound and aromatic vinyl compound with reactants used to prepare the rubber-modified styrene resin, and all of the reactants can be continuously polymerized to form the rubber-modified styrene resin. For example, the copolymer of N-substituted maleimide compound and aromatic vinyl compound can be melted in an unsaturated nitrile compound and then added and mixed with other reactants in a process of continuously polymerizing the rubber-modified styrene resin.

The rubber-modified styrene resin may comprise a graft copolymer resin prepared by graft copolymerizing an aromatic vinyl monomer and an unsaturated nitrile monomer onto a rubbery polymer, and a copolymer resin prepared by copolymerizing an aromatic vinyl monomer, an unsaturated nitrile monomer and a heat resistant aromatic vinyl monomer.

The rubbery polymer comprises a conjugated diene rubber and a rubbery aromatic copolymer.

The rubber-modified styrene resin further comprises a multi-functional vinyl monomer.

The thermoplastic resin composition may have a weight average molecular weight of about 100,000 to about 150,000 and a polydispersity index of about 2 to about 4. Moreover, the thermoplastic resin may have an Izod impact strength of about 15 to about 35 (kgf·cm/cm, 1/8" Notched) measured according to ASTM D256, a melt flow index of about 3 to about 7 (220°C, 10 kg) measured according to ASTM D1238, and a vicat softening temperature of about 107 to about 115°C (5kg, 50°/hr) measured according to ISO R 306.

A method according to an exemplary embodiment of the present invention may comprise polymerizing a first reactant including conjugated diene rubber, aromatic rubbery copolymer, heat resistant aromatic vinyl compound, aromatic vinyl compound, multi-functional vinyl compound and initiator, and a second reactant including unsaturated nitrile compound, a copolymer of N-substituted maleimide compound and aromatic vinyl compound in a plurality of reactors linked in series after continuously introducing the first and second reactants into one of the plurality of reactors (which can be the same or different reactors) through different feeding streams. The number of the plural reactors can be about 2 to about 5.

In an embodiment of the present invention, the first reactant and the second reactant may be directed into the same reactor and polymerized.

In another embodiment of the present invention, the first reactant and the second reactant may be directed into different reactors. For example, the first reactant may be fed into a first reactor and polymerization thereof can be initiated. Thereafter polymer from the first reactor can be transferred to another reactor in the series (for ease of reference, to a "second" reactor). The second reactant may then participate in a downstream polymerization reaction by feeding the second reactant to the second reactor downstream of the first reactor.

In an exemplary embodiment of the present invention, the temperature of each reactor may be maintained at about 90 to about 150°C, and a final polymerization reactor of the plural reactors can be maintained at a temperature of about 110 to about 140°C.

In another embodiment of the present invention, the method may further comprise delivering the polymer to a devolatizer apparatus and removing residual or remaining unreacted reactants and/or volatile components. The polymer is delivered to the devolatizer at a temperature of about 140 to about 160°C. The devolatizer apparatus may be operated under the conditions of a temperature of about 230 to about 260°C and a pressure of about 100 torr or less.

The present invention now will be described more fully hereinafter in the following detailed description of the invention.

The terminology used herein is for the purpose of describing particular embodiments only. As used herein the term "and/or" includes any and all combinations of one or more of the associated listed items. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

A thermoplastic resin composition of the present invention comprises a rubber-modified styrene resin and a copolymer of N-substituted maleimide compound and aromatic vinyl compound. The thermoplastic resin composition according to the present invention includes 100 parts by weight of the rubber-modified styrene resin and 1 to 10 parts by weight of the copolymer of N-substituted maleimide compound and aromatic vinyl compound, based on 100 parts by weight of a mixture of reactants A + B + C + D + E, optionally including a solvent I, used to prepare the rubber-modified styrene resin.

The thermoplastic resin composition according to the present invention may have both excellent heat resistance and excellent impact strength.

In one embodiment of the present invention, the rubber-modified styrene resin may comprise a graft copolymer resin prepared by graft copolymerizing an aromatic vinyl monomer and an unsaturated nitrile monomer onto a rubbery polymer, and a copolymer resin prepared by copolymerizing an aromatic vinyl monomer, an unsaturated nitrile monomer and a heat resistant aromatic vinyl monomer.

The rubbery polymer includes a conjugated diene rubber and a rubbery aromatic copolymer.

The heat resistant aromatic vinyl monomer may include α-methyl styrene.

In an exemplary embodiment of the present invention, the rubber-modified styrene resin may comprise about 5 to about 20 % by weight of the conjugated diene rubber (A), about 0.5 to about 8 % by weight of the aromatic rubbery copolymer (B), about 15 to about 29 % by weight of the heat resistant aromatic vinyl monomer (C), about 10 to about 50 % by weight of the aromatic vinyl monomer (D) and about 10 to about 30 % by weight of the unsaturated nitrile monomer (E), based on the total weight of the rubber-modified styrene resin. As another example, the rubber-modified styrene resin may comprise about 7 to about 15 % by weight of the conjugated diene rubber (A), about 1 to about 5 % by weight of the aromatic rubbery copolymer (B), about 18 to about 27 % by weight of heat resistant aromatic vinyl monomer (C), about 20 to about 45 % by weight of aromatic vinyl monomer (D) and about 15 to about 25 % by weight of unsaturated nitrile monomer (E), based on the total weight of the rubber modified styrene resin.

The rubber-modified styrene resin further comprises a multi-functional vinyl monomer (F). The rubber-modified styrene resin includes the multi-functional vinyl monomer (F) in an amount of 0.005 to 0.2 parts by weight, based on 100 parts by weight of the mixture of reactants A + B + C + D + E, optionally including a solvent I, used to prepare the rubber-modified styrene resin excluding the multi-functional vinyl monomer F.

The multi-functional vinyl monomer F may include divinyl benzene.

The thermoplastic resin composition according to the present invention can be prepared by adding a solution phase of the copolymer of N-substituted maleimide compound and aromatic vinyl compound during continuous polymerization of the rubber-modified styrene resin. The solution phase of the copolymer of N-substituted maleimide compound and aromatic vinyl compound may be prepared by melting the copolymer of N-substituted maleimide compound and aromatic vinyl compound in an unsaturated nitrile compound.

In another embodiment of the present invention, polymerization reactants used to prepare the rubber-modified styrene resin by the continuous polymerization process may comprise the conjugated diene rubber (A), the aromatic rubbery copolymer (B), the heat resistant aromatic vinyl monomer (C), the aromatic vinyl monomer (D), the unsaturated nitrile monomer (E) and organic solvent (I).

The thermoplastic resin may have a weight average molecular weight of about 100,000 to about 150,000 and a polydispersity index measured according to LF-804 column (Waters) through GPC of about 2 to about 4, for example, about 2.2 to about 3.5.

The thermoplastic resin composition having heat resistance and impact strength can be prepared by following method.

A first reactant may be prepared by mixing conjugated diene rubber (A), aromatic rubbery copolymer (B), heat resistant aromatic vinyl compound (C), aromatic vinyl compound (D), multi-functional vinyl compound (F) and initiator (H). The first reactant can comprise conjugated diene rubber (A), aromatic rubbery copolymer (B), heat resistant aromatic vinyl compound (C), aromatic vinyl compound (D), multi-functional vinyl compound (F), initiator (H) and organic solvent (I).

A second reactant may be prepared by melting copolymer (G) of N-substituted maleimide compound and aromatic vinyl compound into unsaturated nitrile compound (E).

A polymer may be prepared by continuously feeding and polymerizing the first reactant and the second reactant through different feeding streams into plural reactors linked in series.

For example, the first reactant may be supplied through a main feeding stream linked to a reactor in the series, and the second reactant may be supplied through a side feeding stream which is different from the main feeding stream to the same or a different reactor in the series.

The copolymer (G) of N-substituted maleimide compound and aromatic vinyl compound may be melted in the unsaturated nitrile compound (F). However, when the copolymer (G) is mixed with other reactants, it cannot melt. Moreover, the amount of copolymer (G) of N-substituted maleimide compound and aromatic vinyl compound can be controlled easily during the polymerization reaction by controlling the flux of the second reactant by feeding the first reactant and the second reactant through different feeding streams. Therefore, reduction of physical properties such as impact strength can be prevented by reducing the difference in miscibility between the graft polymer resin including rubber and a matrix resin.

The first reactant and the second reactant can be fed into the same reactor, or the first reactant and the second reactant can be fed into different reactors.

For example, the first reactant may be fed into a first reactor in a series of plural reactors, and the polymerization reaction may be initiated by the initiator included in the first reactant.

The second reactant may be reacted with the first reactant during the initial polymerization reaction by feeding the second reactant into the first reactor. Alternatively, the second reactant can participate in the polymerization reaction after the polymerization has progressed above a certain point (i.e. after reaching the desired degree of polymerization) by feeding the second reactant into a reactor downstream from the first reactor, for example, one of the final reactors where the polymerization reaction is finished.

The molecular weight and physical properties of the thermoplastic resin can be controlled by feeding the second reactant into different ones of the reactors. For example, if the second reactant is fed into the first reactor in the series of plural reactors with the first reactant and is reacted with the first reactant during the initial polymerization reaction in the first reactor, the thermoplastic resin can have a relatively high molecular weight. If the second reactant is fed to a reactor downstream of the first reactor, however, where it can participate in the continuous polymerization of polymer transferred thereto from an upstream reactor, the molecular weight of the thermoplastic resin can have a relatively lower molecular weight.

The number of the plural reactors in series can be about 2 to about 5.

In an exemplary embodiment of the present invention, various reaction conditions and variables such as feed rate, reaction temperature, residence time, and the type and amount of an initiator added to the reactant can be constantly controlled to maintain a desired polymerization rate within each reactor. The skilled artisan will appreciate and understand exemplary reaction conditions and variables suitable for use in the present invention, which can be in accordance with conventional conditions and variables, without undue experimentation. The temperatures of each reactor may be maintained at about 90 to about 150°C, for example about 110 to about 140°C, although the temperature of the final polymerization reactor of the plural reactors can be maintained at a temperature of about 110 to about 140°C. If temperature of the final reactor is less than about 110°C, economical efficiency can be reduced due to low production yield and energy can be wasted in a devolatizer apparatus. If the temperature of the final reactor is higher than about 140°C, it may be difficult to achieve the desired heat resistance due to the low molecular weight of the resultant resin.

In an exemplary embodiment of the present invention, the polymer can be prepared by a continuous polymerization process in a plurality of reactors, and thereafter the process can further include the steps of delivering the prepared polymer to a devolatizer apparatus and removing residual or remaining unreacted reactants and/or volatile components.

When the polymer is feed from the final reactor to a devolatizer apparatus, the temperature of the polymer may be maintained at a temperature of about 140 to 160°C. Generally, the polymer may be delivered by a pipe connecting the reactor and the devolatizer apparatus. If the temperature of the polymer is less than about 140°C in the delivering process, it can be difficult to effectively transfer the polymer melt to the devolatizer apparatus. If the temperature of the polymer is more than about 160°C, the polymer may not have the desired heat resistance and impact strength due to low molecular weight resulting from depolymerization of the heat resistant aromatic vinyl compound (C).

The devolatizer apparatus may be operated under the conditions of a temperature of about 230 to about 260°C and a pressure of about 1.33 N/cm² or less (100 torr or less). If the temperature of the devolatizer apparatus is less than about 230°C and the pressure of the devolatizer apparatus is higher than about 100 torr, impact strength and color property of the final thermoplastic resin product can be reduced because volatile components remaining in the polymer may not be sufficiently removed. If the temperature of the devolatizer apparatus is higher than about 260°C, color property can be reduced because the polymer may be carbonized.

In another embodiment of the present invention, the first reactant further comprises an organic solvent.

Each component of the thermoplastic resin composition of the present invention now will be described more fully hereinafter in the following detailed description of the invention.

### (A) Conjugated diene rubber

A polymer or a copolymer of conjugated diene compound which has about 4 to about 12 carbons may be used as the conjugated diene rubber (A). For example, the conjugated diene compound may have about 4 to about 8 carbons. Exemplary conjugated diene compounds that can be used to prepare the conjugated diene rubber (A) may include without limitation 1,3-butadiene, 2-methyl-1,3-butadiene(isoprene), 1,3-butadiene(isoprene), 2-ethyl-1,3-butadiene, 2,3-dimethyl-1,3-butadiene, 1,3-pentadiene, 3-butyl-1,3-octadiene, and the like and combinations thereof. For example the conjugated diene compound can be 1,3-butadiene, isoprene, or a combination thereof.

In an exemplary embodiment of the present invention, the butadiene may be used as a solution of about 5% by weight butadiene in styrene (prepared by melting the conjugated diene rubber (A) in styrene), which solution may have a viscosity of about 40 to about 80 mPas (cps) at 25°C.

If the viscosity is less than about 40cps, the desired low gloss property may not be accomplished because rubber particles may be too small. If the viscosity is higher than about 80cps, impact strength may be low because the rubber particles of the final product may be too large.

The conjugated diene rubber (A) may be used in an amount of about 5 to about 20% by weight, for example about 7 to about 15% by weight, based on the total weight of the reactants used to prepare thermoplastic resin. If the amount of the conjugated diene rubber (A) is less than about 5% by weight, the desired high impact strength may not be achieved, and if the amount of the conjugated diene rubber (A) is more than about 20% by weight, the desired excellent heat resistance may not be achieved because heat resistance may be significantly reduced.

### (B) Rubbery aromatic copolymer

In an exemplary embodiment of the present invention, a copolymer of conjugated diene compound and aromatic vinyl compound may be used as the rubbery aromatic copolymer (B). The rubbery aromatic copolymer (B) may be prepared by copolymerizing about 50 to about 80% by weight of a conjugated diene compound and about 20 to about 50% by weight of an aromatic vinyl compound.

Exemplary conjugated diene compounds may include without limitation 1,3-butadiene, 2-methyl-1,3-butadiene, 2-ethyl-1,3-butadiene, 2,3-dimethyl-1,3-1,3-pentadiene, 3-butyl-1,3-octadiene, and the like, and combinations thereof, for example, 1,3-butadiene.

The aromatic vinyl compound used to prepare the rubbery aromatic copolymer (B) may be used in an amount range of about 20 to about 50% by weight, for example about 25 to about 35% by weight, based on about 100% by weight of the rubbery aromatic copolymer (B). If the amount of the aromatic vinyl compound is less than about 20% by weight, it may be difficult to control the balance of physical properties such as low gloss property and impact strength because the aromatic vinyl compound may not play the role of reducing cohesion of particles of the simultaneously used conjugated diene compound. If the amount of the aromatic vinyl compound is more than about 50% by weight, the desired impact strength may not be accomplished because the amount of the rubbery component may be reduced.

Exemplary aromatic vinyl compounds may include without limitation styrene, α-methyl styrene, 2-methyl styrene, 3-methyl styrene, 4-methyl styrene, 2-ethyl styrene, 3-ethyl styrene, 4-ethyl styrene, 4-n-butyl styrene, 1-vinyl naphthalene, 2-vinyl naphthalene and the like and combinations thereof.

In an embodiment of the present invention, the aromatic rubbery copolymer (B) can be a tapered copolymer (rubber component-unsaturated monomer), a linear copolymer, a di-block copolymer, a tri- block copolymer, or a combination thereof.

The method of preparing the aromatic rubbery copolymer (B) will be readily understood by one skilled in the art. The aromatic rubbery copolymer (B) used in the present invention is commercially available, including products available from Asahi Kasei Chemical Corporation, Kumho Petrochemical, Chevronphillips, Kraton, and Atofina.

In an embodiment of the present invention, the aromatic rubbery copolymer (B) may used in an amount of about 0.5 to about 8% by weight, for example about 1 to about 5% by weight, based on the total weight of the reactants. If the amount of the aromatic rubbery copolymer (B) is less than about 0.5% by weight, it may be difficult to achieve the desired balance between low gloss property and high impact strength because it can be difficult to prepare rubber particles having a stable rubber morphology. If the amount of the aromatic rubbery copolymer (B) is more than about 8% by weight, the desired impact resistance may not be obtained.

### (C) Heat resistant aromatic vinyl compound

In an embodiment of the present invention, an aromatic vinyl compound having a structure for improving heat resistance may be used as the heat resistant aromatic vinyl compound (C), for example, α-methyl styrene.

The heat resistant aromatic vinyl compound (C) may used in an amount of about 15 to about 29% by weight, for example about 18 to about 27% by weight, and as another example about 19 to about 25% by weight, based on total weight of the reactants. If the amount of the heat resistant aromatic vinyl compound (C) is less than about 15% by weight, it may be difficult to achieve the desired high heat resistance, and if the amount of the heat resistant aromatic vinyl compound (C) is more than about 29% by weight, it may be difficult to achieve both desired impact strength and heat resistance because the molecular weight of the polymer can be significantly reduced during the polymerizing process.

### (D) Aromatic vinyl compound

Exemplary aromatic vinyl compounds (D) used in the present invention may include without limitation styrene, 2-methyl styrene, 3-methyl styrene, 4-methyl styrene, 2-ethyl styrene, 3-ethyl styrene, 4-ethyl styrene, 4-n-propyl styrene, 4-t-butyl styrene, 1-vinyl naphthalene, 2-vinyl naphthalene, vinyl toluene and the like, and combinations thereof. The aromatic vinyl compound (D) may be used in an amount of about 10 to about 50% by weight, for example about 15 to about 45% by weight, and as another example about 20 to about 43% by weight, based on the total weight of the reactants, depending on the desired properties of the final product.

### (E) Unsaturated nitrile compound

Exemplary unsaturated nitrile compounds (E) includes without limitation acrylonitrile, methacrylonitrile, and the like, and combinations thereof. The unsaturated nitrile compound (E) may be used in an amount of about 10 to about 30% by weight, for example about 13 to about 25% by weight, and as another example about 15 to about 20% by weight, based on the total weight of the reactants, and can vary depending on the desired properties of the final product.

### (F) Multi-functional vinyl compound

Exemplary multi-functional vinyl compounds (F) may include without limitation divinylbenzene, ethylene glycol dimethacrylate, allyl methacrylate, diallylphthalate, diallyl maleate, triallylisocyanurate, and the like and combinations thereof.

The multi-functional vinyl compound (F) is used in an amount of about 0.005 to about 0.2 parts by weight, for example, about 0.01 to about 0.15 parts by weight, and as another example about 0.05 to about 0.1 parts by weight, based on about 100 parts by weight of (A)+(B)+(C)+(D)+(E)+(I). If the amount of the multi-functional vinyl compound (F) is less than about 0.005 parts by weight, impact strength and heat resistance may not be improved due to the effect of improving molecular weight. If the amount of the multi-functional vinyl compound (F) is more than about 0.2 parts by weight, the polymerization reaction may be unstable and rubber gel can be appeared.

The multi-functional vinyl compound (F) may function as a cross linking agent in the rubber-modified styrene resin of the thermoplastic resin of the present invention. As the amount of the multi-functional vinyl compound (F) is increased, it can affect the polydispersity index of the thermoplastic resin composition. The polydispersity index measured according to LF-804 column (Waters) may be obtained by obtaining elution curves of samples including THF as a moving phase through GPC and charted on the basis of standard polystyrene polymer.

For example, the polydispersity index of the thermoplastic resin of the present invention may be about 2 to about 4, for example about 2.2 to about 3.5.

### (G) Copolymer of N-maleimide compound and aromatic vinyl compound

The copolymer of N-maleimide compound and aromatic vinyl compound may be prepared by copolymerizing about 40 to about 60 % by weight of N-maleimide compound and about 40 to about 60 % by weight of aromatic vinyl compound. The copolymer of N-maleimide compound and aromatic vinyl compound can be prepared by known methods such as emulsion polymerization, suspension polymerization, solution polymerization, or bulk polymerization.

For example, the copolymer of N-maleimide compound and aromatic vinyl compound may be prepared by copolymerizing the aromatic vinyl compound and maleic anhydride and thereafter substituting the oxygen atom at the center of maleic anhydride to form an N-substituted imide group,.

Exemplary N-maleimide compounds may include without limitation N-phenyl maleimide. Exemplary aromatic vinyl compounds may include without limitation styrene, 2-methyl styrene, 3-methyl styrene, 4-methyl styrene, 2-butyl styrene, 1-vinyl naphthalene, vinyl toluene and the like, and combinations thereof.

The copolymer (G) of N-maleimide compound and aromatic vinyl compound is used in an amount of about 1 to about 10 parts by weight, for example about 1 to about 7 parts by weight, and as another example about 2 to about 5 parts by weight, based o n about 100 parts by weight of (A)+(B)+(C)+(D)+(E)+(I). If the amount of the copolymer (G) of N-maleimide compound and aromatic vinyl compound is less than about 1 part, the desired heat resistance may not be obtained. If the amount of the copolymer (G) of N-maleimide compound and aromatic vinyl compound is more about than 10 parts, physical properties such as impact strength may be reduced, and sufficient heat resistance may not result because the copolymer (G) of N-maleimide compound and aromatic vinyl compound may not be sufficiently melted into unsaturated nitrile compound.

### (H) Initiator

Exemplary initiators may include without limitation benzoyl peroxide, t-butyl peroxyisobutyrate, 1,1-bis(t-butylperoxy)cyclohexane, 2,2-bis(4,4-di-t-butylperoxy cyclohexane)propane, t-hexyl peroxy isopropyl monocarbonate, t-butyl peroxylaurate, t-butyl peroxy isopropyl monocarbonate, t-butyl peroxy 2-ethylhexyl monocarbonate, t-hexyl peroxybenzoate, t-butyl peroxyacetate, 2,2-bis(t-butyl peroxy)butane, t-butyl peroxybenzoate, dicumyl peroxide, 2,5-dimethyl-2,5-bis(t-butyl peroxy)hexane, t-butyl cumyl peroxide, di-t-butyl peroxide, di-t-amyl peroxide and the like, and combinations thereof.

The initiator (H) may be used in an amount of about 0.01 to about 0.5 parts by weight, for example about 0.04 to about 0.1 parts by weight, based on about 100 parts by weight of (A)+(B)+(C)+(D)+(E)+(I). If the initiator is used in an amount of more than about 0.5, it may be difficult to control reaction time and residual temperature because of too rapid polymerization, or impact strength may be reduced because the polymer may have a lower molecular weight. If the initiator is used in an amount of less than about 0.01, the desired conversion ratio may not be reached due to significantly reduced reaction rate.

### (I) Organic solvent

The present invention optionally can further comprise an organic solvent (I). The organic solvent (I) may be inactive (inert) to a polymerizing reaction and can dissolve both reactant and polymer. Exemplary solvents include without limitation alcohols, aromatic hydrocarbons such as petroleum ether and ethyl benzene, halides such as carbon tetrachloride and chloroform, ketones such as methylethyl ketone , and the like, and combinations thereof. The organic solvent (I) may be used in an amount of about 0 to about 30% by weight, for example about 5 to about 20% by weight, and as another example about 10 to about 25% by weight, based on total weight of reactants.

The invention may be better understood by reference to the following examples which are intended for the purpose of illustration.

### Examples

### Example 1

8 parts by weight of a 5% by weight solution of butadiene rubber in styrene (ASAPRENE 700A; Asahi Kasei Chemical Corporation) having a solution viscosity of 45 mPas (cps) and 2 parts by weight of a 5% by weight solution of styrene-butadiene rubber in styrene (ASAPRENE 670A; Asahi Kasei Chemical Corporation) having a solution viscosity of 40 cps and comprising 39% by weight of styrene are melted into a solution comprising 20.25 parts by weight of α- methyl styrene, 36.75 parts by weight of styrene and 15 parts by weight of ethylbenzene solvent, and 0.045 parts by weight of 1,1-bis(t-butylperoxy)cyclohexane as initiator and 0.05 parts by weight of divinyl benzene are added to prepare the first reactant. The prepared first reactant is injected into a first reactor (R1) through a main feeding stream at a rate of 19.95 kg/hr.

A second reactant is prepared in which 2 parts by weight of a copolymer of N-substituted maleimide compound and aromatic vinyl compound (MS-NA(PMI 50%); DENKA Corporation) is melted into 18 parts by weight of acrylonitrile and the second reactant is simultaneously fed into the first reactor through a sub-feeding stream at a rate of 5.05 kg/hr.

The first reactor (R1) is controlled at a polymerizing temperature of 110 °C, a screw-rotating speed of 120 rpm, and a rate of polymerization of 25%. The resultant polymer from the first reactor is fed to a second reactor (R2) which is controlled at a polymerizing temperature of 121 °C, a screw-rotating speed of 100 rpm, and a rate of polymerization of 46%. The resultant polymer from the second reactor is fed to a third reactor (R3) which is controlled at a polymerizing temperature of 130 °C, a screw-rotating speed of 60 rpm, and a rate of polymerization of 68% to prepare a polymer.

The polymer is delivered as a polymer melt at 160 °C via a pipe delivering polymer to a devolatizer and zapper. The devolatizer removes residual or remaining reactants and/or volatile components and a thermoplastic resin is prepared in the form of pellets.

### Example 2

The preparation process is carried out using the same method as preparation Example 1 except that a second reactant in which 5 parts by weight of the copolymer of N-substituted maleimide compound and aromatic vinyl compound (MS-NA(PMI 50%); DENKA Corporation) is melted into 18 parts by weight of acrylonitrile is fed into the first reactor through a sub-feeding stream at a rate of 5.63 kg/hr.

### Example 3

The preparation process is carried out using the same method as preparation Example 1 except that after melting 8 parts by weight of butadiene rubber and 2 parts by weight of styrene-butadiene copolymer into a solution comprising 20.25 parts by weight of α- methyl styrene, 36.75 parts by weight of styrene, 15 parts by weight of ethylbenzene solvent and 9 parts by weight of acrylonitrile, 0.045 parts by weight of 1,1-bis(t-butylperoxy)cyclohexane as initiator and 0.05 parts by weight of divinyl benzene to prepare the first reactant, the prepared first reactant is injected into the first reactor (R1) through a main feeding stream at a rate of 23.31 kg/hr, and the second reactant in which 2 parts by weight of the copolymer of N-substituted maleimide compound and aromatic vinyl compound (MS-NA(PMI 50%); DENKA Corporation) is melted into 9 parts by weight of acrylonitrile is fed into the third reactor (R3) through a sub-feeding stream at a rate of 1.69 kg/hr.

### Comparative Example 1

The preparation process is carried out using the same method as Preparation Example 1 except that a second reactant in which 2 parts by weight of N-phenyl maleimide (PMI) instead of the copolymer of N-substituted maleimide compound and aromatic vinyl compound is melted into 18 parts by weight of acrylonitrile is fed into the first reactor through a sub-feeding stream at a rate of 5.05 kg/hr.

### Comparative Example 2

The preparation process is carried out using the same method as Preparation Example 1 except that a second reactant in which 5 parts by weight of N-phenyl maleimide (PMI) instead of the copolymer of N-substituted maleimide compound and aromatic vinyl compound is melted into 18 parts by weight of acrylonitrile is fed into the first reactor through a sub-feeding stream at a rate of 5.63 kg/hr.

### Comparative Example 3

The preparation process is carried out using the same method as Preparation Example 1 except that 11.25 parts by weight of α- methyl styrene and 45 parts by weight of styrene are used as monomers, and the second reactant is prepared using 18.75 parts by weight of acrylonitrile instead of the copolymer of N-substituted maleimide compound and aromatic vinyl compound.

### Comparative Example 4

The preparation process is carried out using the same method as Preparation Example 1 except that 20.25 parts by weight of α- methyl styrene and 36 parts by weight of styrene are used as monomers, and the second reactant is prepared using 18.75 parts by weight of acrylonitrile instead of the copolymer of N-substituted maleimide compound and aromatic vinyl compound.

### Comparative Example 5

The preparation process is carried out using the same method as Preparation Example 1 except that 30 parts by weight of α- methyl styrene and 26.25 parts by weight of styrene are used as monomers, and the second reactant is prepared using 18 parts by weight of acrylonitrile instead of the copolymer of N-substituted maleimide compound and aromatic vinyl compound.

The respective foregoing components in the amounts of Examples 1 to 3 and Comparative Examples 1 to 5 are represented in the following Table 1.

**[Table 1]**

| | Example 1 | Example 2 | Example 3 | Comparative Example 1 | Comparative Example 2 | Comparative Example 3 | Comparative Example 4 | Comparative Example 5 |
|---|---|---|---|---|---|---|---|---|
| (A) | 8 | 8 | 8 | 8 | 8 | 8 | 8 | 8 |
| (B) | 2 | 2 | 2 | 2 | 2 | 2 | 2 | 2 |
| (C) | 20.25 | 20.25 | 20.25 | 20.25 | 20.25 | 11.25 | 20.25 | 30 |
| (D) | 36.75 | 36.75 | 36.75 | 36.75 | 36.75 | 45 | 36 | 26.25 |
| (E) | 18 | 18 | 18 | 18 | 18 | 18.75 | 18.75 | 18.75 |
| (F) | 0.05 | 0.05 | 0.05 | 0.05 | 0.05 | 0.05 | 0.05 | 0.05 |
| (G) | 2 | 5 | 2 | - | - | - | - | - |
| (H) | 0.045 | 0.045 | 0.045 | 0.045 | 0.045 | 0.045 | 0.045 | 0.045 |
| (I) | 15 | 15 | 15 | 15 | 15 | 15 | 15 | 15 |
| PMI monomer | - | - | - | 2 | 5 | - | - | - |
| Putting position of (E)+(G) | 1^{st} Reactor | 1^{st} Reactor | 3^{rd} Reactor | - | - | - | - | - |
| % by weight of (G) | 10% | 22% | 10% | - | - | - | - | - |

### Physical properties measurement

Physical properties of the thermoplastic resin prepared by Examples 1 to 5 and Comparative Examples 1 to 6 are measured by the following methods and the results are presented in the following Tables 2 and 3.
(1) Weight average molecular weight: An elution curve is drawn up by gel-permeation chromatography (GPC, LF-804 column manufactured by Waters Corporation) using THF as a moving phase and relative number average molecular weight, weight average molecular weight and polydispersity index (PDI) are analyzed on the basis of the standard polystyrene polymer.
(2) Izod impact strength (kgfcm/cm, 1/8" Notched): Izod impact strength is measured according to ASTM 256
(3) Fluidity (220°C, 10kg): Melt flow index of the samples is measured according to ASTM D-1238.
(4) Vicat softening point (5kg, 50°C/hr): Vicat softening point of the samples is measured according to ISO R 306.

**[Table 2]**

| | Example 1 | Example 2 | Example 3 |
|---|---|---|---|
| Temperature of the third reactor (R3) (°C) | 130 | 130 | 130 |
| Temperature (°C) of delivering pipe(R3-> the de-volatile apparatus) | 160 | 160 | 160 |
| Weight average molecular weight | 136,100 | 141,100 | 130,700 |
| polydisperse index | 2.6 | 19.8 | 20.1 |
| Izod impact strength(kgfcm/cm, 1/8" Notched) | 21.6 | 19.8 | 20.1 |
| Melt index (220°C, 10kg) | 4.1 | 3.5 | 4.6 |
| Vicat softening point (5kg, 50°C/hr) | 108.1 | 110.3 | 108.0 |

**[Table 3]**

| | Comparative Example 1 | Comparative Example 2 | Comparative Example 3 | Comparative Example 4 | Comparative Example 5 |
|---|---|---|---|---|---|
| Temperature of the third reactor (R3) (°C) | 130 | 130 | 130 | 130 | 130 |
| Temperature (°C) of delivering pipe (R3-> the devolatile apparatus) | 160 | 160 | 160 | 160 | 160 |
| Weight average molecular weight | 130,800 | 139,300 | 148,200 | 132,300 | 113,000 |
| polydisperse index | 2.7 | 2.7 | 2.4 | 2.7 | 2.7 |
| Izod impact strength (kgfcm/cm, 1/8" Notched) | 8.5 | 4.2 | 24.3 | 22.6 | 11.6 |
| Melt index (220°C, 10kg) | 4.2 | 3.1 | 3.6 | 4.3 | 10.4 |
| Vicat softening point (5kg, 50°C/hr) | 108.3 | 109.2 | 101.1 | 106.0 | 105.8 |

The results shown in the above Table 2 and 3 show that high heat resistance can be obtained without reducing physical properties such as impact strength by using the copolymer of N-substituted maleimide compound and aromatic vinyl compound. Moreover, when the second reactant is added during both an initial and middle or latter polymerization, heat resistance is significantly improved. Further, when the second reactant is fed into the first reactor such as in Example 3, weight average molecular weight is reduced as compared to Examples 1 and 2.

On the other hand, when PMI monomer is melted into unsaturated nitrile compound and fed instantly such as in Comparative Examples 1 and 2, impact strength is significantly reduced by reducing miscibility with the existing matrix.

Moreover, Comparative Examples 3 to 5 which control only the amount of the heat resistant aromatic vinyl compound have limited improved heat resistance.

As illustrated by the Examples and Comparative Examples, the thermoplastic resin according to the present invention can have excellent heat resistance and impact strength, and the method of the present invention can improve heat resistance of the thermoplastic resin while maintaining other physical properties. Further, the thermoplastic resin can have an excellent balance of heat resistance and impact strength.

This application claims priority from Korean Patent Application No. 2008-135514, filed December 29, 2008.

## Claims

1. A thermoplastic resin composition that can have excellent heat resistance and impact strength comprising a rubber-modified styrene resin and a copolymer of N-substituted maleimide compound and aromatic vinyl compound;
wherein said thermoplastic resin composition includes 1 to 10 parts by weight of the copolymer of N-substituted maleimide compound and aromatic vinyl compound based on 100 parts by weight of a mixture of reactants A + B + C + D + E, optionally including an organic solvent I, for preparing the rubber-modified styrene resin, said mixture containing a conjugated diene rubber A, a rubbery aromatic compound B, a heat resistant aromatic vinyl compound C, an aromatic vinyl compound D, and an unsaturated nitrile compound E; and
wherein said rubber-modified styrene resin further comprises 0.005 to 0.2 parts by weight of a multi-functional vinyl monomer, based on 100 parts by weight of the mixture of reactants A + B + C + D + E, optionally including an organic solvent I, for preparing the rubber-modified styrene resin, said mixture containing a conjugated diene rubber A, a rubbery aromatic compound B, a heat resistant aromatic vinyl compound C, an aromatic vinyl compound D, and an unsaturated nitrile compound E.

2. The thermoplastic resin composition of Claim 1, wherein said thermoplastic resin composition is prepared by adding a solution phase of the copolymer of N-substituted maleimide compound and aromatic vinyl compound during continuous polymerization of the rubber-modified styrene resin.

3. The thermoplastic resin composition of Claim 2, wherein the solution phase of said copolymer of N-substituted maleimide compound and aromatic vinyl compound comprises said copolymer melted in an unsaturated nitrile compound.

4. The thermoplastic resin composition of Claim 1, wherein said multi-functional vinyl compound comprises divinylbenzene, ethylene glycol dimethacrylate, allyl methacrylate, diallylphthalate, diallyl maleate, triallylisocyanurate or a combination thereof.

5. The thermoplastic resin composition of any of Claims 1 to 4, wherein said rubber-modified styrene resin comprises a graft copolymer resin prepared by graft copolymerizing an aromatic vinyl monomer and a unsaturated nitrile monomer onto a rubbery polymer, and a copolymer resin prepared by copolymerizing an aromatic vinyl monomer, unsaturated nitrile monomer and heat resistant aromatic vinyl monomer.

6. The thermoplastic resin composition of Claim 5, wherein said rubbery polymer comprises a conjugated diene rubber and a rubbery aromatic copolymer.

7. The thermoplastic resin composition of Claim 6, wherein said rubbery aromatic copolymer is prepared by copolymerizing 50 to 80% by weight of a conjugated diene compound and 20 to 50% by weight of an aromatic vinyl compound, and wherein said conjugated diene compound comprises 1,3-butadiene, 2-methyl-1,3-butadiene(isoprene), 2-ethyl-1,3-butadiene, 2,3-dimethyl-1,3-butadiene, 1,3-pentadiene, 3-butyl-1,3-octadiene or a combination thereof.

8. The thermoplastic resin composition of Claim 4, wherein said rubber-modified styrene resin comprises 5 to 20 % by weight of the conjugated diene rubber based on the total weight of the reactants, 0.5 to 8 % by weight of the rubbery aromatic copolymer based on the total weight of the reactants, 15 to 29 % by weight of the heat resistant aromatic vinyl monomer based on the total weight of the reactants, 10 to 50 % by weight of the aromatic vinyl monomer based on the total weight of the reactants and 10 to 30 % by weight of the unsaturated nitrile monomer based on the total weight of the reactants.

9. The thermoplastic resin composition of Claim 5, wherein said aromatic vinyl monomer comprises α-methyl styrene.

10. The thermoplastic resin composition of any of Claims 1 to 9, wherein said copolymer of N-substituted maleimide compound and aromatic vinyl compound is prepared by copolymerizing 40 to 60 % by weight of the N-substituted maleimide compound and 40 to 60 % by weight of the aromatic vinyl compound.

11. The thermoplastic resin composition of Claim 3, wherein said thermoplastic resin has a weight average molecular weight of 100,000 to 150,000.

12. The thermoplastic resin composition of any of Claims 1 to 11, wherein said thermoplastic resin has a polydispersity index of 2 to 4.

13. The thermoplastic resin composition of any of Claims 1 to 12, wherein said thermoplastic resin has a Izod impact strength (kgf·cm/cm, 1/8" Notched) measured according to ASTM D₂₅₆ of 15 to 35, a melt flow index (220°C, 10 kg) measured according to ASTM D1238 of 3 to 7, and a vicat softening temperature (5kg, 50°C/hr) measured according to ISO R 306 of 107 to 115°C.

14. A method of preparing a thermoplastic resin composition that can have excellent heat resist and impact strength comprising:
continuously feeding a first feed stream including a first reactant comprising a conjugated diene rubber, an aromatic rubbery copolymer, a heat resistant aromatic vinyl compound, an aromatic vinyl compound, a multi-functional vinyl compound and an initiator and a second feed stream that is different from the first feed stream including a second reactant comprising an unsaturated nitrile compound, a copolymer of N-substituted maleimide compound and an aromatic vinyl compound to a reactor that is part of a plurality of reactors linked in series; and
thereafter polymerizing the first reactant and the second reactant to prepare a polymer.

15. The method of Claim 14, wherein the temperature of each of said reactors is maintained at 90 to 150°C.

16. The method of Claim 14 or 15, wherein the plurality of reactors includes a final polymerization reactor, and wherein the final polymerization reactor is maintained at a temperature of 110 to 140°C.

17. The method of any of Claims 14 to 16, further comprising delivering a polymer from the final polymerization reactor to a devolatizer apparatus and removing volatile components of the polymer.

18. The method of Claim 17, wherein the polymer is delivered from the final polymerization reactor to the devolatizer at a temperature of 140 to 160°C

19. The method of Claim 17, wherein said devolatizer apparatus is operated under the conditions of a temperature of 230 to 260°C and a pressure of 100 torr or less.

20. The method of any of Claims 14 to 19, wherein the number of the plurality of reactors is 2 to 5.

21. The method of any of Claims 14 to 20, wherein the first reactant and the second reactant are fed into the same reactor and polymerized.

22. The method of any of Claims 14 to 21, wherein the first reactant is fed into a first reactor and polymerization thereof is initiated in the first reactor to form a polymer, the second reactant is fed into a downstream reactor, the polymer from the first reactor is directed into the downstream reactor, and the second reactant participates in additional polymerization of the polymer in the downstream reactor.

23. The method of any of Claims 14 to 22, wherein said first reactant further comprises an organic solvent.

## Patentansprüche

1. Thermoplastische Harzzusammensetzung, die ausgezeichnete Wärmebeständigkeit und Schlagzähigkeit aufweisen kann, umfassend ein kautschukmodifiziertes Styrolharz und ein Copolymer von einer N-substituierten Maleimidverbindung und einer aromatischen Vinylverbindung;
wobei die thermoplastische Harzzusammensetzung 1 bis 10 Gewichtsteile des Copolymers von einer N-substituierten Maleimidverbindung und einer aromatischen Vinylverbindung auf der Basis von 100 Gewichtsteilen eines, wahlweise ein organisches Lösungsmittel I einschließenden, Gemischs aus den Reaktanten A+B+C+D+E zur Herstellung des kautschukmodifizierten Styrolharzes einschließt, wobei das Gemisch einen Kautschuk aus konjugiertem Dien A, eine aromatische Kautschukverbindung B, eine wärmebeständige aromatische Vinylverbindung C, eine aromatische Vinylverbindung D und eine ungesättigte Nitrilverbindung E enthält; und wobei das kautschukmodifizierte Styrolharz des Weiteren 0,005 bis 0,2 Gewichtsteile eines multifunktionellen Vinylmonomers auf der Basis von 100 Gewichtsteilen des, wahlweise ein organisches Lösungsmittel I einschließenden, Gemischs aus den Reaktanten A+B+C+D+E zur Herstellung des kautschukmodifizierten Styrolharzes umfasst, wobei das Gemisch einen Kautschuk aus konjugiertem Dien A, eine aromatische Kautschukverbindung B, eine wärmebeständige aromatische Vinylverbindung C, eine aromatische Vinylverbindung D und eine ungesättigte Nitrilverbindung E enthält.

2. Thermoplastische Harzzusammensetzung nach Anspruch 1, wobei die thermoplastische Harzzusammensetzung durch Zugabe einer Lösungsphase des Copolymers aus einer N-substituierten Maleimidverbindung und einer aromatischen Vinylverbindung während einer kontinuierlichen Polymerisation des kautschukmodifizierten Styrolharzes hergestellt wird.

3. Thermoplastische Harzzusammensetzung nach Anspruch 2, wobei die Lösungsphase des Copolymers aus einer N-substituierten Maleimidverbindung und einer aromatischen Vinylverbindung das in einer ungesättigten Nitrilverbindung geschmolzene Copolymer umfasst.

4. Thermoplastische Harzzusammensetzung nach Anspruch 1, wobei die multifunktionelle Vinylverbindung Divinylbenzol, Ethylenglycoldimethacrylat, Allylmethacrylat, Diallylphthalat, Diallylmaleat, Triallylisocyanurat oder eine Kombination davon umfasst.

5. Thermoplastische Harzzusammensetzung nach einem der Ansprüche 1 bis 4, wobei das kautschukmodifizierte Styrolharz ein Pfropfcopolymerharz, das durch Pfropfcopolymerisieren eines aromatischen Vinylmonomers und eines ungesättigten Nitrilmonomers auf ein Kautschukpolymer hergestellt wird, und ein Copolymerharz, das durch Copolymerisieren eines aromatischen Vinylmonomers, eines ungesättigten Nitrilmonomers und eines wärmebeständigen aromatischen Vinylmonomers hergestellt wird, umfasst.

6. Thermoplastische Harzzusammensetzung nach Anspruch 5, wobei das Kautschukpolymer einen Kautschuk aus konjugiertem Dien und ein aromatisches Kautschukcopolymer umfasst.

7. Thermoplastische Harzzusammensetzung nach Anspruch 6, wobei das aromatische Kautschukcopolymer durch Copolymersisieren von 50 bis 80 Gew.-% einer konjugierten Dienverbindung und 20 bis 50 Gew.-% einer aromatischen Vinylverbindung hergestellt wird, und wobei die konjugierte Dienverbindung 1,3-Butadien, 2-Methyl-1,3-butadien (Isopren), 2-Ethyl-1,3-butadien, 2,3-Dimethyl-1,3-butadien, 1,3-Pentadien, 3-Butyl-1,3-octadien oder eine Kombination davon umfasst.

8. Thermoplastische Harzzusammensetzung nach Anspruch 4, wobei das kautschukmodifizierte Styrolharz 5 bis 20 Gew.-% des Kautschuks aus konjugiertem Dien auf der Basis des Gesamtgewichts der Reaktanten, 0,5 bis 8 Gew.-% des aromatischen Kautschukcopolymers auf der Basis des Gesamtgewichts der Reaktanten, 15 bis 29 Gew.-% des wärmebeständigen aromatischen Vinylmonomers auf der Basis des Gesamtgewichts der Reaktanten, 10 bis 50 Gew.-% des aromatischen Vinylmonomers auf der Basis des Gesamtgewichts der Reaktanten und 10 bis 30 Gew.-% des ungesättigten Nitrilmonomers auf der Basis des Gesamtgewichts der Reaktanten umfasst.

9. Thermoplastische Harzzusammensetzung nach Anspruch 5, wobei das aromatische Vinylmonomer α-Methylstyrol umfasst.

10. Thermoplastische Harzzusammensetzung nach einem der Ansprüche 1 bis 9, wobei das Copolymer von einer N-substituierten Maleimidverbindung und einer aromatischen Vinylverbindung durch Copolymerisieren von 40 bis 60 Gew.-% der N-substituierten Maleimidverbindung und 40 bis 60 Gew.-% der aromatischen Vinylverbindung hergestellt wird.

11. Thermoplastische Harzzusammensetzung nach Anspruch 3, wobei das thermoplastische Harz ein Gewichtsmittel des Molekulargewichts von 100.000 bis 150.000 aufweist.

12. Thermoplastische Harzzusammensetzung nach einem der Ansprüche 1 bis 11, wobei das thermoplastische Harz einen Polydispersitätsindex von 2 bis 4 aufweist.

13. Thermoplastische Harzzusammensetzung nach einem der Ansprüche 1 bis 12, wobei das thermoplastische Harz eine gemäß ASTM D256 gemessene Izod-Schlagzähigkeit (kgf·cm/cm, 1/8" gekerbt) von 15 bis 35, einen gemäß ASTM D1238 gemessenen Schmelzflussindex (220°C, 10 kg) von 3 bis 7 und eine gemäß ISO R 306 gemessene Vicat-Erweichungstemperatur (5kg, 50°C/Std.) von 107 bis 115°C aufweist.

14. Verfahren zur Herstellung einer thermoplastischen Harzzusammensetzung, die ausgezeichnete Wärmebeständigkeit und Schlagzähigkeit aufweisen kann, umfassend:
kontinuierliches Einspeisen eines ersten Zufuhrstroms, einschließend einen ersten Reaktanten, der einen Kautschuk aus konjugiertem Dien, ein aromatisches Kautschukcopolymer, eine wärmebeständige aromatische Vinylverbindung, eine aromatische Vinylverbindung, eine multifunktionelle Vinylverbindung und einen Initiator umfasst, und eines sich vom ersten Zufuhrstrom unterscheidenden zweiten Zufuhrstroms, einschließend einen zweiten Reaktanten, der eine ungesättigte Nitrilverbindung, ein Copolymer von einer N-substituierten Maleimidverbindung und einer aromatischen Vinylverbindung umfasst, in einen Reaktor, der Teil einer Mehrzahl von in Reihe verbundenen Reaktoren ist; und
anschließend Polymerisieren des ersten Reaktanten und des zweiten Reaktanten zur Herstellung eines Polymers.

15. Verfahren nach Anspruch 14, wobei die Temperatur von jedem der Reaktoren bei 90 bis 150°C gehalten wird.

16. Verfahren nach Anspruch 14 oder 15, wobei die Mehrzahl an Reaktoren einen Endpolymerisationsreaktor einschließt und wobei der Endpolymerisationsreaktor bei einer Temperatur von 110 bis 140°C gehalten wird.

17. Verfahren nach einem der Ansprüche 14 bis 16, des Weiteren umfassend das Abgeben eines Polymers aus dem Endpolymerisationsreaktors in eine Entgasungsapparatur und Entfernen von flüchtigen Bestandteilen des Polymers.

18. Verfahren nach Anspruch 17, wobei das Polymer aus dem Endpolymerisationsreaktor in den Entgaser bei einer Temperatur von 140 bis 160°C abgegeben wird.

19. Verfahren nach Anspruch 17, wobei die Entgasungsapparatur unter den Bedingungen einer Temperatur von 230 bis 260°C und einem Druck von 100 Torr oder weniger betrieben wird.

20. Verfahren nach einem der Ansprüche 14 bis 19, wobei die Anzahl der Mehrzahl von Reaktoren 2 bis 5 beträgt.

21. Verfahren nach einem der Ansprüche 14 bis 20, wobei der erste Reaktant und der zweite Reaktant in denselben Reaktor eingespeist und dort polymerisiert werden.

22. Verfahren nach einem der Ansprüche 14 bis 21, wobei der erste Reaktant in einen ersten Reaktor eingespeist wird und dessen Polymerisation zum Bilden eines Polymers im ersten Reaktor eingeleitet wird, der zweite Reaktant in einen sich stromabwärts befindenden Reaktor eingespeist wird, das Polymer vom ersten Reaktor in den sich stromabwärts befindenden Reaktor geleitet wird und der zweite Reaktant an einer zusätzlichen Polymerisation des Polymers im sich stromabwärts befindenden Reaktor teilnimmt.

23. Verfahren nach einem der Ansprüche 14 bis 22, wobei der erste Reaktant des Weiteren ein organisches Lösungsmittel umfasst.

## Revendications

1. Composition de résine thermoplastique présentant d'excellentes capacités de résistance à la chaleur et de résistance au choc, comprenant une résine de styrène modifiée par caoutchouc et un copolymère d'un composé de type maléimide à N-substituant et d'un composé vinyl-aromatique,
laquelle composition de résine thermoplastique contient 1 à 10 parties en poids du copolymère de composé de type maléimide à N-substituant et de composé de type vinyl-aromatique, pour 100 parties en poids d'un mélange de réactifs A, B, C, D et E, contenant, en option, un solvant organique (I) et destiné à la préparation de la résine de styrène modifiée par caoutchouc, lequel mélange contient un caoutchouc de diène conjugué (A), un composé caoutchouteux aromatique (B), un composé vinyl-aromatique améliorant la résistance à la chaleur (C), un composé vinyl-aromatique (D), et un composé de type nitrile insaturé (E),
et dans laquelle composition ladite résine de styrène modifiée par caoutchouc comprend en outre de 0,005 à 0,2 partie en poids d'un monomère vinylique polyfonctionnel, pour 100 parties en poids du mélange de réactifs A, B, C, D et E, contenant, en option, un solvant organique (I) et destiné à la préparation de la résine de styrène modifiée par caoutchouc, lequel mélange contient un caoutchouc de diène conjugué (A), un composé caoutchouteux aromatique (B), un composé vinyl-aromatique améliorant la résistance à la chaleur (C), un composé vinyl-aromatique (D), et un composé de type nitrile insaturé (E).

2. Composition de résine thermoplastique, conforme à la revendication 1, laquelle composition de résine thermoplastique a été préparée par addition, pendant la formation de la résine de styrène modifiée par caoutchouc par polymérisation en continu, d'une phase qui est une solution du copolymère de composé de type maléimide à N-substituant et de composé vinyl-aromatique.

3. Composition de résine thermoplastique, conforme à la revendication 2, pour laquelle la phase qui est une solution du copolymère de composé de type maléimide à N-substituant et de composé vinyl-aromatique comprend dudit copolymère dissous dans un composé de type nitrile insaturé.

4. Composition de résine thermoplastique, conforme à la revendication 1, dans laquelle ledit composé vinylique polyfonctionnel comprend du divinyl-benzène, du diméthacrylate d'éthylène-glycol, du méthacrylate d'allyle, du phtalate de diallyle, du maléate de diallyle ou de l'isocyanurate de triallyle, ou une combinaison de ces composés.

5. Composition de résine thermoplastique, conforme à l'une des revendications 1 à 4, dans laquelle ladite résine de styrène modifiée par caoutchouc comprend une résine copolymère de greffage, préparée par copolymérisation par greffage d'un monomère vinyl-aromatique et d'un monomère de type nitrile insaturé sur un polymère caoutchouteux, et une résine copolymère préparée par copolymérisation d'un monomère vinyl-aromatique, d'un monomère de type nitrile insaturé et d'un monomère vinyl-aromatique améliorant la résistance à la chaleur.

6. Composition de résine thermoplastique, conforme à la revendication 5, dans laquelle ledit polymère caoutchouteux comprend un caoutchouc de diène conjugué et un copolymère caoutchouteux aromatique.

7. Composition de résine thermoplastique, conforme à la revendication 6, pour laquelle ledit copolymère caoutchouteux aromatique a été préparé par copolymérisation de 50 à 80 % en poids d'un composé de type diène conjugué et de 20 à 50 % en poids d'un composé vinyl-aromatique, et pour laquelle ledit composé de type diène conjugué comprend du buta-1,3-diène, du 2-méthyl-buta-1,3-diène (isoprène), du 2-éthyl-buta-1,3-diène, du 2,3-diméthyl-buta-1,3-diène, du penta-1,3-diène, du 3-butyl-octa-1,3-diène, ou une combinaison de ces composés.

8. Composition de résine thermoplastique, conforme à la revendication 4, dans laquelle ladite résine de styrène modifiée par caoutchouc comprend de 5 à 20 % du caoutchouc de diène conjugué, en poids rapporté au poids total des réactifs, de 0,5 à 8 % du copolymère caoutchouteux aromatique, en poids rapporté au poids total des réactifs, de 15 à 29 % du monomère vinyl-aromatique améliorant la résistance à la chaleur, en poids rapporté au poids total des réactifs, de 10 à 50 % du monomère vinyl-aromatique, en poids rapporté au poids total des réactifs, et de 10 à 30 % du monomère de type nitrile insaturé, en poids rapporté au poids total des réactifs.

9. Composition de résine thermoplastique, conforme à la revendication 5, dans laquelle ledit monomère vinyl-aromatique comprend de l'α-méthyl-styrène.

10. Composition de résine thermoplastique, conforme à l'une des revendications 1 à 9, pour laquelle ledit copolymère de composé de type maléimide à N-substituant et de composé vinyl-aromatique a été préparé par copolymérisation de 40 à 60 % en poids du composé de type maléimide à N-substituant et de 40 à 60 % en poids du composé vinyl-aromatique.

11. Composition de résine thermoplastique, conforme à la revendication 3, laquelle résine thermoplastique présente une masse molaire moyenne en poids valant de 100 000 à 150 000.

12. Composition de résine thermoplastique, conforme à l'une des revendications 1 à 11, laquelle résine thermoplastique présente un indice de polydispersité valant de 2 à 4.

13. Composition de résine thermoplastique, conforme à l'une des revendications 1 à 12, laquelle résine thermoplastique présente une résistance au choc Izod, mesurée selon la norme ASTM D-256 (entaille de 1/8^{ème} de pouce), valant de 15 à 35 kgf.cm/cm, un indice de fluidité à chaud, mesuré selon la norme ASTM D-1238 (220 °C, 10 kg), valant de 3 à 7, et une température de ramollissement Vicat, mesurée selon la norme ISO R-306 (5 kg, 50 °C/h), valant de 107 à 115 °C.

14. Procédé de préparation d'une composition de résine thermoplastique présentant d'excellentes capacités de résistance à la chaleur et de résistance au choc, lequel procédé comporte les étapes suivantes :
- envoyer en continu, dans un réacteur qui fait partie d'un ensemble de plusieurs réacteurs raccordés en série, un premier courant d'alimentation contenant un premier réactif, comprenant un caoutchouc de diène conjugué, un copolymère caoutchouteux aromatique, un composé vinyl-aromatique améliorant la résistance à la chaleur, un composé vinyl-aromatique, un composé vinylique polyfonctionnel et un amorceur, et un deuxième courant d'alimentation, différent du premier courant d'alimentation et contenant un deuxième réactif, comprenant un composé de type nitrile insaturé et un copolymère d'un composé de type maléimide à N-substituant et d'un composé vinyl-aromatique ;
- et faire ensuite polymériser le premier réactif et le deuxième réactif de manière à préparer un polymère.

15. Procédé conforme à la revendication 14, dans lequel la température régnant dans chacun desdits réacteurs est maintenue à une valeur de 90 à 150 °C.

16. Procédé conforme à la revendication 14 ou 15, dans lequel l'ensemble de réacteurs comporte un réacteur final de polymérisation, et la température régnant dans ce réacteur final de polymérisation est maintenue à une valeur de 110 à 140 °C.

17. Procédé conforme à l'une des revendications 14 à 16, qui comporte en outre le fait de transférer le polymère du réacteur final de polymérisation dans un appareillage de dévolatilisation et le fait de chasser les composants volatils du polymère.

18. Procédé conforme à la revendication 17, dans lequel c'est à une température de 140 à 160 °C que le polymère est transféré du réacteur final de polymérisation dans l'appareillage de dévolatilisation.

19. Procédé conforme à la revendication 17, dans lequel on fait fonctionner ledit appareillage de dévolatilisation dans les conditions suivantes : une température de 230 à 260 °C, et une pression inférieure ou égale à 100 torrs.

20. Procédé conforme à l'une des revendications 14 à 19, dans lequel le nombre de réacteurs dans ledit ensemble est de 2 à 5.

21. Procédé conforme à l'une des revendications 14 à 20, dans lequel on envoie le premier réactif et le deuxième réactif dans le même réacteur et on les y fait polymériser.

22. Procédé conforme à l'une des revendications 14 à 21, dans lequel on envoie le premier réactif dans un premier réacteur et l'on en fait démarrer la polymérisation dans ce premier réacteur, de manière à ce qu'il s'y forme un polymère, on envoie le deuxième réactif dans un réacteur situé en aval, l'on transfère le polymère du premier réacteur dans ce réacteur aval, et le deuxième réactif participe à la poursuite de la polymérisation donnant le polymère dans ce réacteur aval.

23. Procédé conforme à l'une des revendications 14 à 22, dans lequel ledit premier réactif comprend en outre un solvant organique.
